# EUROPEAN PATENT SPECIFICATION

(11) **EP 3 496 179 B1**
(45) Date of publication and mention of the grant of the patent: **14.06.2023**
(21) Application number: 17206212.7
(22) Date of filing: 08.12.2017
(51) Int. Cl.: H01M 50/209, H01M 50/298, H01M 50/503

(54) **CONNECTOR FOR A BATTERY PACK**
VERBINDER FÜR EIN BATTERIEPACK
CONNECTEUR POUR BLOC-BATTERIE

(43) Date of publication of application: 12.06.2019
(73) Proprietor: Samsung SDI Co., Ltd., Yongin-si, Gyeonggi-do 17084 (KR)
(72) Inventor: EICHBERGER, Georg, 8054 Graz (AT)
(74) Representative: Gulde & Partner

(56) References cited:
- US-A- 5 496 657
- US-A1- 2014 079 981

## Description

### Field of the Invention

The present invention relates to a battery pack including a connector, a vehicle including the battery pack as well as an improved connector itself.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle. A plurality of battery modules is connected together to form a battery pack. The battery modules may be arranged in tiers / different levels of a housing encompassing the battery pack. The housing may include a number of separate chambers for the accommodation of battery modules in order to ensure proper fixing the battery modules within the housing and to enhance the mechanical stability of the housing. Therefor, the housing may include internal walls.

A battery pack further comprises a wiring interconnecting the single battery modules directly or indirectly via a busbar with external terminals. The wiring thus may establish an electrical path between battery modules themselves and/or between battery modules and one or more busbars. One drawback of common wirings for battery packs is that connecting battery modules and busbars is difficult due to the limited accessibility of the connection points during assembly of the battery pack, in particular when the wiring should also pass a through hole in a wall of the housing. The fact also prohibits a high degree of automatization of the battery pack fabrication process. First examples of battery pack systems with connector means may be found in US 5 496 657 A and US 2014/079981 A1. However, they show deficiencies in their suitability for high-degree automatization processes.

It is thus an object of the present invention to overcome or reduce at least some of the drawbacks of the prior art and to provide a battery pack that in particular supports a higher degree of automatization.

### Summary of Invention

One or more of the drawbacks of the prior art could be avoided or at least reduced by means of the present invention. In particular, a battery pack is provided comprising one or more battery modules, each including a plurality of secondary battery cells; a housing for accommodation of the one or more battery modules, the housing including an exterior wall and one or more interior walls; and a wiring for interconnecting the battery modules among each other and/or with one or more busbars, wherein the walls of the housing include at least one through-hole where the wiring is passing through. The battery pack is characterized in that a connector is placed within the through-hole. The connector includes an electrically conducting body and a jacket made of an electrically insulating material and surrounding an outer surface of the conducting body. The conducting body is (electrically) connectable with the wiring from both sides of the wall. The outer surface of the jacket includes wall plug elements including split-ribs which are slope-aligned contrary to the insert direction of the connector. Preferably, the electrically conducting body is a female connector including an electrically conducting bushing as electrically conducting body and the jacket is surrounding an outer surface of the bushing. The bushing is being accessible from both sides of the wall.

Thus, the wiring of the battery pack (for a vehicle) according to the present invention includes a connector, which is positioned in a through-hole of an inner or exterior housing wall. The wiring further includes wire leads being connected at one end to battery module(s) and/or busbar(s) and bearing at the other end another connecting body complementary to the connecting body of the connector. For example, the connector may be a kind of jack-to-jack connector (or in terms of the present invention female connector) and the wiring will include jacks (or in terms of the present invention male connector). During the fabrication process of the battery pack, the jacks and jack-to-jack connector are stuck together. Alternatively, the connector may be a male connector (i.e. there is a kind of jack on both sides of the connector) and the wiring then includes fitting female connectors. It may be further possible to provide a connector including on one side a female connection (like a bushing) and the other side a male connection (like a jack). Preferred is a female connector. The fabrication process of the battery pack, in particular the implementation of the wiring, is simplified and the process open for automatization. Moreover, disassembly of single modules in case of malfunction is to facilitated.

The battery pack according to the present invention comprises one or more, preferably two or more battery modules, which are placed in a common housing. Beside an exterior wall the housing may include internal (or inner) walls to define separate chambers for single battery modules or a number of battery modules less than the total number of battery modules. The battery modules of the battery pack may also be arranged in different levels separated by for example an intermediate bottom, which also represents a housing wall in the sense of the present invention. A number of battery modules or all of the battery modules may be electrically connected together by the wiring. In addition or in alternative, one or more busbars may be provided to which battery modules are electrically coupled. To establish the desired wiring it may be reasonable to pass wire leads through housing walls. The present invention simplifies such wiring process. In particular, a connector is positioned within a through-hole of the housing wall, where an electric path should be established.

For example, the female connector includes a bushing into which male connectors could be inserted from both sides of the wall. Thus, the wiring includes also male connectors, which fit inside the female connectors. There is no limitation with regard to the specific design of the fitting structure of the female connector respectively male connectors as far as the function of the connector is still performed. Specifically, the fitting structure should ensure a fixed position of the connector elements even in case of external impact. Furthermore, the fitting structure shall be construed to permanently ensure the desired electric conductivity, especially for high voltage applications. For example, the fitting structure may include threads, knurling and grooves for fixing the female connector with the male connectors. The bushing is made of electrically conductive material, preferably copper, aluminium, a copper alloy, an aluminium alloy or a copper aluminium alloy for high voltage applications.

The jacket is made of an electrically insulating material, in particular high-melting plastics, and surrounds the bushing. The jacket is to electrically isolate the wall, which is commonly made of a metallic material, from the bushing.

The outer surface of the jacket includes wall plug elements. In other words, the outer surface of the female conductor is designed as a kind of dowel. When the connector is inserted into the through-hole of the wall, the wall plug elements shall easily fix the final position of the connector. Therefore, the wall plug elements include split-ribs which are slope-aligned contrary to the insert direction of the connector. In addition, the inner surface of the through-hole may be designed to support the fixing of the connector by means of the wall plug elements. For example, there may be notches, where the before mentioned split-ribs are arrested. The wall plug elements may be designed to ensure fixing of the connector in housing walls of different thickness.

According to another preferred embodiment, the outer surface of the jacket includes alignment elements. The alignment elements shall ensure for example a centric alignment of the connector in the through-hole. Therefore, the alignment elements may for example include a protrusion on the outer surface of the jacket, which corresponds to a recess within the circumference of the through-hole.

Further, the jacket preferably includes an arrester element at one side of the outer surface of the jacket. The arrester element easily ensures reaching the desired final position of connector within the through-hole. The arrester element may for example include a stop collar. The wall of the housing may also include arrester elements, like protrusions, which interact with the arrester element of the female connector such that rotation of the connector is prohibited.

According to another preferred embodiment of the present invention, the jacket includes a sealing element. Thus, liquids or gas could not pass the through-hole when the connector rests in the through-hole of the wall. The sealing element may for example include a sealing ring provided at the outer surface of the jacket.

Two or more connectors may further be fixed together in parallel and placed in a common through-hole. In other words, if it is reasonable to provide two or more electrical pass through within one wall for establishing the desired wiring, the desired number of connectors may be provided as a rigid one-piece component. Therefore, the jackets of the single connectors are rigidly fixed to each other, for example by means of connection ribs. Accordingly, the through-hole of the wall must correspond to the one-piece connector assembly. For example, the through-hole will have a longitudinal shape if two connectors are combined.

According to another embodiment, two or more connectors may be coupled by a flexible connection. In that case, each of the connectors will be placed in a separate through-hole.

The flexible connection may serve as anti rotation feature, while still compensate tolerances.

According to another aspect of the present invention, a vehicle including a battery pack as defined above is provided. That is, the battery pack is adapted for operation in a vehicle, in particular as a power source for an e-vehicle.

Finally, the present invention refers to the connector itself including an electrically conducting body and a jacket made of an electrically insulating material and surrounding an outer surface of the conducting body. The conducting body is connectable from opposite sides with the wiring. Thus, when the connector is inserted into the through-hole of the wall the conducting body is accessible from both sides of the wall. An outer surface of the jacket includes wall plug elements as mentioned above. The outer surface of the jacket may also preferably include the above mentioned alignment element. The outer surface of the jacket may further include the arrester element at one side of the outer surface of the jacket as mentioned above. Preferably, the jacket further includes the sealing element as mentioned above. The conducting body may be made of copper, aluminium or alloys thereof.

Further aspects of the present invention could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic perspective view on a battery module;
- Fig. 2: illustrates a schematic cross sectional view on a battery module according to an embodiment of the present invention;
- Fig. 3A-3D: illustrate a female connector according to a first embodiment of the present invention;
- Fig. 4A-4D: illustrate a female connector according to a second embodiment of the present invention;
- Fig. 5A-5D: illustrate different views on a third embodiment of the present invention including two female connectors; and
- Fig. 6A-6D: illustrate different views on a fourth embodiment of the present invention including two female connectors.

### Detailed Description of the Invention

Features of the inventive concept and methods of accomplishing the same may be understood more readily by reference to the following detailed description of embodiments and the accompanying drawings. Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and technique that is not necessary to those having ordinary skill in the art for a complete understanding of the aspects and features of the present invention may not be described. Unless otherwise noted, like reference numerals denote like elements throughout the attached drawings and the written description, and thus, descriptions thereof will not be repeated. In the drawings, the relative sizes of elements, layers, and regions may be exaggerated for clarity.

As used herein, the term "and/or" includes any and all combinations of one or more of the associated listed items. Further, the use of "may" when describing embodiments of the present invention refers to "one or more embodiments of the present invention."

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention.

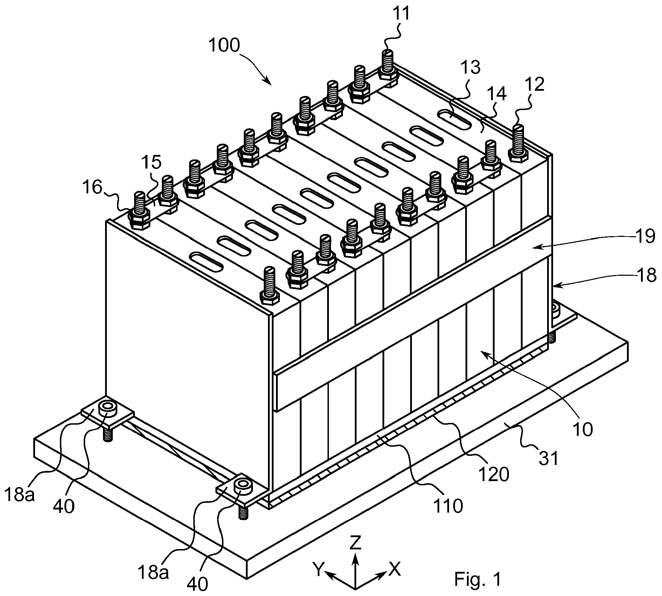

Referring to Fig. 1, an exemplary embodiment of a battery module 100 includes a plurality of battery cells 10 aligned in one direction and a heat exchange member 110 provided adjacent to a bottom surface of the plurality of battery cells 10. A pair of end plates 18 are provided to face wide surfaces of the battery cells 10 at the outside of the battery cells 10, and a connection plate 19 is configured to connect the pair of end plates 18 to each other thereby fixing the plurality of battery cells 10 together. Fastening portions 18a on both sides of the battery module 100 are fastened to a support plate 31 by bolts 40.

Here, each battery cell 10 is a prismatic (or rectangular) cell, the wide flat surfaces of the cells being stacked together to form the battery module 100. Further, each battery cell 10 includes a battery case configured for accommodation of an electrode assembly and an electrolyte. The battery case is hermetically sealed by a cap assembly 14. The cap assembly 14 is provided with positive and negative electrode terminals 11 and 12 having different polarities, and a vent 13. The vent 13 is a safety means of the battery cell 10, which acts as a passage through which gas generated in the battery cell 10 is exhausted to the outside of the battery cell 10. The positive and negative electrode terminals 11 and 12 of neighbouring battery cells 10 are electrically connected through a bus bar 15, and the bus bar 15 may be fixed by a nut 16 or the like. Hence, the battery module 100 may be used as power source unit by electrically connecting the plurality of battery cells 10 as one bundle.

Generally, the battery cells 10 generate a large amount of heat while being charged/discharged. The generated heat is accumulated in the battery cells 10, thereby accelerating the deterioration of the battery cells 10. Therefore, the heat exchange member 110 is disposed adjacent to the bottom surface of the battery cells 10 so as to cool down the battery cells 10. In addition, an elastic member 120 made of rubber or other elastic materials may be interposed between the support plate 31 and the heat exchange member 110.

The heat exchange member 110 may include a cooling plate provided to have a size corresponding to that of the bottom surface of the plurality of battery cells 10, e.g., the cooling plate may completely overlap the entire bottom surfaces of all the battery cells 10 in the battery module 100. The cooling plate usually includes a passage through which a coolant can move. The coolant performs a heat exchange with the battery cells 10 while circulating inside the heat exchange member 110, i.e., inside the cooling plate.

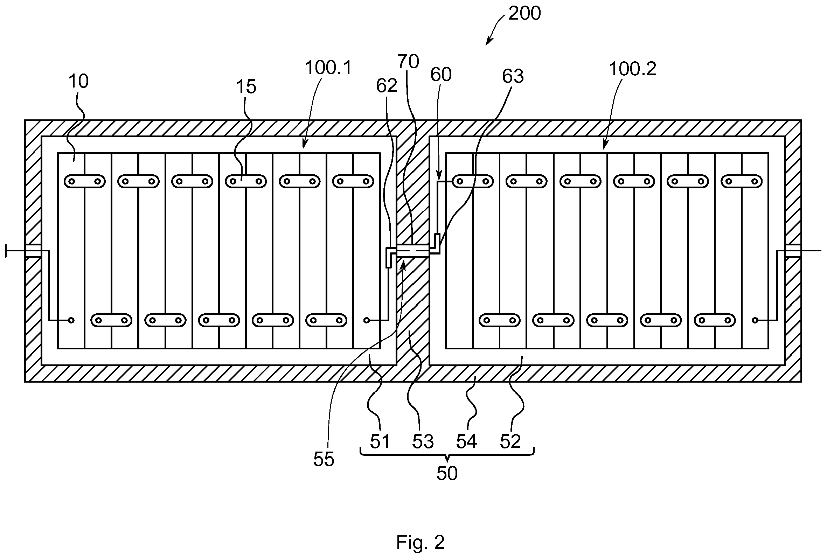

Fig. 2 is a sectional top view on a battery pack 200 according to an exemplary embodiment including two battery modules 100.1, 100.2, for example both configured as illustrated in Figure 1. The battery modules 100.1, 100.2 are arranged within a housing 50, which provides two separate housing sections 51, 52 for accommodation of a single battery module 100.1, 100.2. The housing 50 includes an inner wall 53 and an exterior wall 54. Here, a simple wiring 60 electrically connects the battery modules 100.1, 100.2. The wiring 60 passes the inner wall 53. Hence, the inner wall 53 includes a through hole 55 where the wiring 60 passes through and which is schematically illustrated in the sectional top view of Figure 2. Within the through-hole 55 a female connector 70 is placed; the construction of the female connector 70 will be described in detail below. The wiring 60 includes a first male connector 62 which is coupled to the female connector 70 from the side of section 51, whereas a second male connector 63 establishes electrical contact from the side of section 52.

It should be understood that the embodiment of Figure 2 is only for illustrative purpose and a battery pack may include only a single battery module or more than two battery modules. Furthermore, the illustrated arrangement of the battery modules is also only exemplary. For example, battery modules may be arranged in different tiers and different orientation to each other. Moreover, inner walls of the housing may separate sections for accommodation of two or more battery modules. Finally, the wiring may not directly contact battery modules, but connects busbars (not illustrated), which are themselves connected with the terminals of one or more battery modules. The purpose of the present invention is to simplify the manufacturing process in case that the wiring needs to pass a wall of the housing.

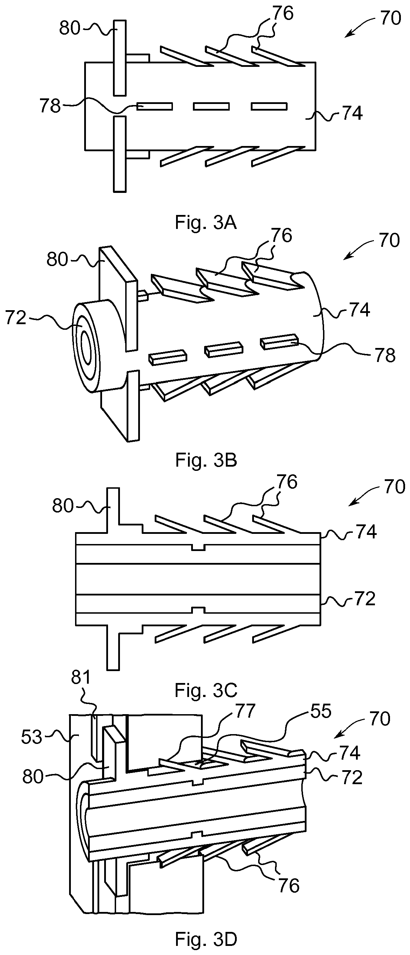

Figures 3A to 3D illustrate different views on the female connector 70 according to a first embodiment of the present invention. The female connector 70 includes a bushing 72 as an electrically conducting body and a jacket 74 made of an electrically insulating material and surrounding an outer surface of the bushing 72. The female connector 72 is positioned in the through-hole 55 of a housing wall, for example the inner wall 53 of the housing 50. The bushing 72 is accessible from both sides, i.e. male connectors (not shown) may be inserted into the bushing 72 from both sides in order to establish electric connection there between. During the fabrication process of the battery pack 200, the male connectors and the female connector are stuck together. Hence, the fabrication process is simplified and open for automatization.

Thus, the female connector 70 includes the bushing 72 into which male connectors could be inserted from both sides of the inner wall 53. There is no limitation with regard to the specific design of the fitting structure of the female connector 72 respectively male connectors as far as the function of the connector is still performed. Specifically, the fitting structure should ensure a fixed position of the connector elements even in case of external impact. Furthermore, the fitting structure shall be construed to permanently ensure the desired electric conductivity, especially for high voltage applications. For example, the fitting structure may include threads, knurling and grooves for fixing the female connector 70 and with the male connectors. The bushing 72 is made of an electrically conductive material, preferably copper, aluminium or an alloy thereof for high voltage applications.

The jacket 74 is made of an electrically insulating material, in particular high-melting plastics, and surrounds the bushing 72. The jacket 74 is to electrically isolate the inner wall 53, which is commonly made of a metallic material, from the bushing 72.

An outer surface of the jacket 72 includes wall plug elements 76. In other words, the outer surface of the female conductor 70 is designed as a kind of dowel. When the female connector 70 is inserted into the through-hole of the inner wall 53, the wall plug elements 76 shall easily fix the final position of the female connector 70. Therefore, the wall plug elements 76 may for example include split-ribs which are slope-aligned contrary to the insert direction of the female connector 70 as shown in Figures 3A to 3D. In addition, the inner surface of the through-hole 55 may be designed to support the fixing of the female connector 70 by means of the wall plug elements 76. For example, there may be notches 77, where the above mentioned split-ribs are arrested. The wall plug elements 76 are designed to ensure fixing of the female connector 70 even in housing walls of different thickness.

The outer surface of the jacket 74 further includes alignment elements 78. The alignment elements 78 shall ensure a centric alignment of the female connector 70 in the through-hole 55. Therefore, the alignment elements 78 have the shape of a protrusion positioned on the outer surface of the jacket 74, which for example may correspond to a recess (not shown) within the circumference of the through-hole 55.

Further, the jacket 74 includes an arrester element 80 at one side of the outer surface of the jacket 74. The arrester element 80 easily ensures reaching the desired final position of female connector 70 within the through-hole 55. Here, the arrester element 80 has the shape of a stop collar. The arrester element 80 may be designed to ensure a proper clamping between the arrester element 80 and the wall plug elements 76 so as to avoid relative movement of the female connector 70. The inner wall 53 of the housing 50 may also include arrester elements, like protrusions 81, which interact with the arrester elements 80 of the female connector 70 such that rotation of the female connector 70 is prohibited.

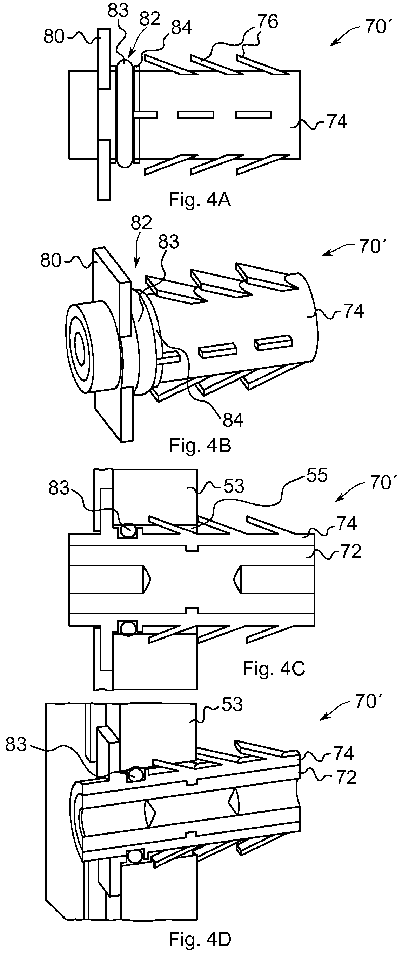

Figures 4A to 4D illustrate different views on a female connector 70' according to a second embodiment of the present invention. The female connector 70' of the second embodiment complies with the female connector 70' of the first embodiment except that the jacket 74 includes a sealing element 82 and the shape of the brushing 72 slightly departs.

Due to the sealing element 82 liquids or gas could not pass the through-hole when the female connector 70 rests in the through-hole 55 of the wall 53. Here, the sealing element 82 includes a sealing ring 83 provided at the outer surface of the jacket 74. The sealing ring 83 rests in a rim defined by the arrestor element 80 and circumferential protrusion 84 on the outer surface of the jacket 74.

The brushing 72 of the second embodiment does not include a through-hole but two blind holes in order to improve the sealing capability. Electric conductivity of the brushing may thus be improved, when also the tips of the male connectors touch the brushing.

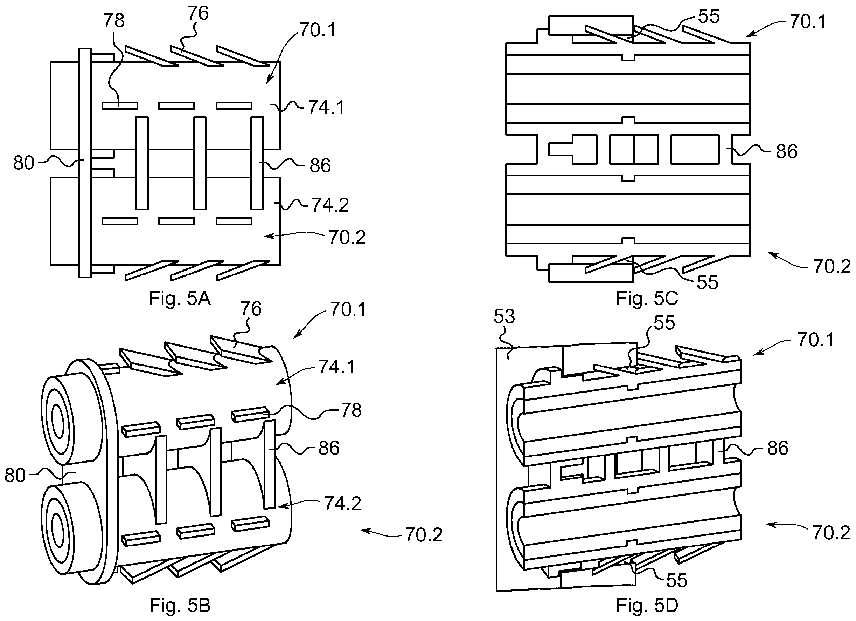

Figures 5A to 5D illustrate different views on third embodiment of the present invention including two female connectors 70.1 and 70.2, which are fixed together in parallel and placed in a common through-hole 55 of the wall 53 as a rigid one-piece component. Therefore, the jackets 74.1, 74.2 of the single female connectors 70.1, 70.2 are rigidly fixed to each other by means of connection ribs 86. Furthermore, both female connectors 70.1, 70.2 are also joined together by a common arrester element 80. The further structural elements, namely wall plug elements 76 and alignment elements 78 comply with the structural elements described in above first embodiment. The through-hole 55 of the wall 53 must correspond to the one-piece female connector assembly. Here, said through-hole 55 has a longitudinal shape.

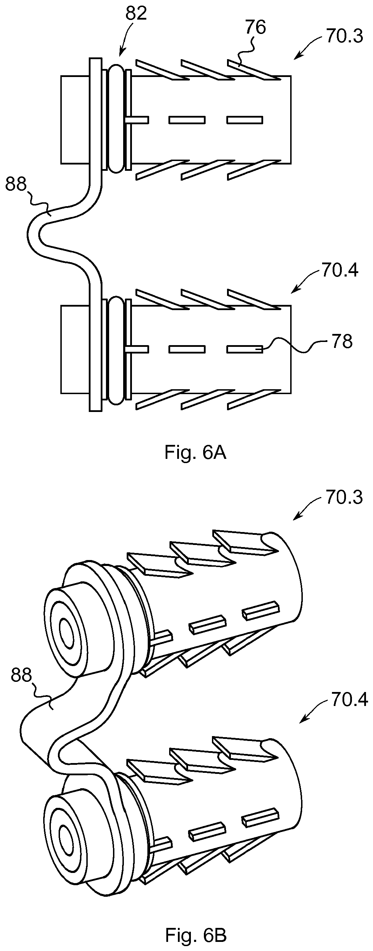

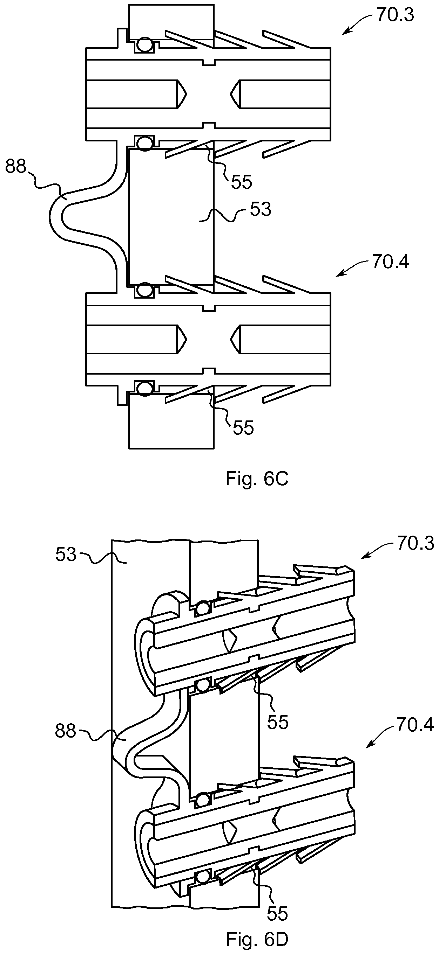

Figures 6A to 6D illustrate different views on a fourth embodiment of the present invention including two female connectors 70.3 and 70.4, which are coupled by a flexible connection 88. Each of the female connectors 70.3, 70.4 will be placed in a separate through-hole 55. The flexible connection 88 may serve as anti rotation feature, while still compensate tolerances. Wall plug elements 76 and alignment elements 78 are the same as in the first embodiment and the sealing element 82 is the same as described in the second embodiment.

### Reference Signs

- 10: battery cell
- 11,12: electrode terminals
- 13: vent
- 14: cap assembly
- 15: bus bar
- 16: nut
- 18: end plate
- 18a: fastening portion
- 19: connection plate
- 31: support plate
- 40: bolt
- 50: housing
- 51, 52: housing section
- 53: inner wall of the housing 50
- 54: exterior wall of the housing 50
- 55: through-hole
- 60: wiring
- 62: first male connector
- 63: second male connector
- 70, 70', 70.1 - 70.4: female connector
- 72: electrically conducting bushing
- 74, 74.1, 74.2: jacket
- 76: wall plug element
- 77: notch
- 78: alignment element
- 80: arrester element
- 81: protrusion
- 82: sealing element
- 83: sealing ring
- 84: protrusion
- 86: connection rib
- 88: flexible connection
- 100, 100.1, 100.2: battery module
- 110: heat exchange member
- 120: elastic member
- 200: battery pack

## Claims

1. A battery pack (200), comprising:
one or more battery modules (100.1, 100.2), each including a plurality of secondary battery cells (10);
a housing (50) for accommodation of the one or more battery modules (100.1, 100.2), the housing (50) including an exterior wall (54) and one or more inner walls (53); and
a wiring (60) for interconnecting the battery modules (100.1, 100.2) among each other and/or with one or more busbars, wherein the walls (53, 54) of the housing (50) include at least one through-hole (55) where the wiring (60) is passing through,
**characterized in that**
a connector is placed within the through-hole (55), the connector including an electrically conducting body and a jacket (74, 74.1, 74.2) made of an electrically insulating material and surrounding an outer surface of the conducting body, the conducting body being connectable with the wiring (60) from both sides of the wall (53, 54), and
wherein an outer surface of the jacket (74, 74.1, 74.2) includes wall plug elements (76) including split-ribs which are slope-aligned contrary to the insert direction of the connector.

2. The battery pack (200) of claim 1, wherein the connector is a female connector (70, 70.1 - 70.4), the female connector (70, 70.1 - 70.4) including a bushing (72) as the electrically conducting body and the jacket (74, 74.1, 74.2) is surrounding an outer surface of the bushing (72), the bushing (72) being accessible from both sides of the wall (53, 54).

3. The battery pack of any of the preceding claims, wherein the outer surface of the jacket (74, 74.1, 74.2) includes an alignment element (78).

4. The battery pack of any one of the preceding claims, wherein the jacket (74, 74.1, 74.2) includes an arrester element (80) at one side of the outer surface of the jacket (74, 74.1, 74.2).

5. The battery pack of any one of the preceding claims, wherein the jacket (74, 74.1, 74.2) includes a sealing element (82).

6. The battery pack of any one of the preceding claims, wherein two or more connectors are fixed together in parallel and placed in a common through-hole (55).

7. The battery pack of any one of the preceding claims, wherein the conducting body is made of aluminium, copper or an alloy of aluminium and/or copper.

8. A vehicle including a battery pack (200) according to any one of the preceding claims.

9. A connector, comprising:
an electrically conducting bushing (72), the bushing (72) being connectable with a wiring (60) from opposite sides; and
a jacket (74, 74.1, 74.2) made of an electrically insulating material and surrounding an outer surface of the bushing (72),
wherein an outer surface of the jacket (74, 74.1, 74.2) includes wall plug elements (76) including split-ribs which are slope-aligned contrary to the insert direction of the connector.

10. The connector of claim 9, wherein the connector is a female connector (70, 70.1 - 70.4).

11. The connector of claims 9 or 10, wherein an outer surface of the jacket (74, 74.1, 74.2) includes an alignment element (78).

12. The connector of any one of claims 9 through 11, wherein the outer surface of the jacket (74, 74.1, 74.2) includes an arrester element (80) at one side of the outer surface of the jacket (74, 74.1, 74.2).

13. The connector of any one of claims 9 through 12, wherein the jacket (74, 74.1, 74.2) includes a sealing element (82).

## Patentansprüche

1. Batteriepack (200), umfassend:
ein oder mehrere Batteriemodule (100.1, 100.2), die jeweils eine Vielzahl von Sekundärbatteriezellen (10) umfassen;
ein Gehäuse (50) zur Aufnahme des einen oder der mehreren Batteriemodule (100.1, 100.2), wobei das Gehäuse (50) eine Außenwand (54) und eine oder mehrere Innenwände (53) aufweist; und
eine Verdrahtung (60) zum Verbinden der Batteriemodule (100.1, 100.2) untereinander und/oder mit einer oder mehreren Sammelschienen, wobei die Wände (53, 54) des Gehäuses (50) mindestens ein Durchgangsloch (55) aufweisen, durch das die Verdrahtung (60) verläuft,
**dadurch gekennzeichnet, dass**
ein Verbinder in dem Durchgangsloch (55) angeordnet ist, wobei der Verbinder einen elektrisch leitenden Körper und eine Ummantelung (74, 74.1, 74.2) aus einem elektrisch isolierenden Material aufweist, die eine Außenfläche des leitenden Körpers umgibt, wobei der leitende Körper mit der Verdrahtung (60) von beiden Seiten der Wand (53, 54) her verbindbar ist, und
wobei eine Außenfläche der Ummantelung (74, 74.1, 74.2) Wandsteckelemente (76) umfasst, die Spaltrippen aufweisen, die entgegen der Einsteckrichtung des Verbinders schräg ausgerichtet sind.

2. Batteriepack (200) nach Anspruch 1, wobei der Verbinder eine Anschlussbuchse (70, 70.1 - 70.4) ist, wobei die Anschlussbuchse (70, 70.1 - 70.4) eine Buchse (72) als den elektrisch leitenden Körper enthält und die Ummantelung (74, 74.1, 74.2) eine Außenfläche der Buchse (72) umgibt, wobei die Buchse (72) von beiden Seiten der Wand (53, 54) zugänglich ist.

3. Batteriepack nach einem der vorhergehenden Ansprüche, wobei die Außenfläche der Ummantelung (74, 74.1, 74.2) ein Ausrichtungselement (78) aufweist.

4. Batteriepack nach einem der vorhergehenden Ansprüche, wobei die Ummantelung (74, 74.1, 74.2) ein Ableitelement (80) an einer Seite der Außenfläche der Ummantelung (74, 74.1, 74.2) aufweist.

5. Batteriepack nach einem der vorhergehenden Ansprüche, wobei die Ummantelung (74, 74.1, 74.2) ein Dichtungselement (82) aufweist.

6. Batteriepack nach einem der vorhergehenden Ansprüche, wobei zwei oder mehr Verbinder parallel aneinander befestigt und in einem gemeinsamen Durchgangsloch (55) angeordnet sind.

7. Batteriepack nach einem der vorhergehenden Ansprüche, wobei der leitende Körper aus Aluminium, Kupfer oder einer Legierung aus Aluminium und/oder Kupfer besteht.

8. Fahrzeug, umfassend ein Batteriepack (200) nach einem der vorhergehenden Ansprüche

9. Verbinder, umfassend:
eine elektrisch leitende Buchse (72), wobei die Buchse (72) von gegenüberliegenden Seiten mit einer Verdrahtung (60) verbindbar ist; und
eine Ummantelung (74, 74.1, 74.2) aus einem elektrisch isolierenden Material, die eine Außenfläche der Buchse (72) umgibt,
wobei eine Außenfläche der Ummantelung (74, 74.1, 74.2) Wandsteckelemente (76) umfasst, die Spaltrippen aufweisen, die entgegen der Einsteckrichtung des Verbinders schräg ausgerichtet sind.

10. Verbinder nach Anspruch 9, wobei der Verbinder eine Anschlussbuchse (70, 70.1 - 70.4) ist.

11. Verbinder nach Anspruch 9 oder 10, wobei eine Außenfläche der Ummantelung (74, 74.1, 74.2) ein Ausrichtungselement (78) aufweist.

12. Verbinder nach einem der Ansprüche 9 bis 11, wobei die Außenfläche der Ummantelung (74, 74.1, 74.2) ein Ableitelement (80) an einer Seite der Außenfläche des Ummantelung (74, 74.1, 74.2) aufweist.

13. Verbinder nach einem der Ansprüche 9 bis 12, wobei die Ummantelung (74, 74.1, 74.2) ein Dichtungselement (82) enthält.

## Revendications

1. Bloc-batterie (200), comprenant :
un ou plusieurs modules de batterie (100.1, 100.2), chacun comportant une pluralité d'éléments de batterie secondaire (10) ;
un boîtier (50) pour recevoir les un ou plusieurs modules de batterie (100.1, 100.2), le boîtier (50) comportant une paroi (54) extérieure et une ou plusieurs parois (53) intérieures ; et
un câblage (60) pour interconnecter les modules de batterie (100.1, 100.2) entre eux et/ou avec une ou plusieurs barres omnibus, où les parois (53, 54) du boîtier (50) comportent au moins un trou traversant (55) à travers lequel passe le câblage (60),
**caractérisé en ce que**
un connecteur est placé dans le trou traversant (55), le connecteur comportant un corps électriquement conducteur et une gaine (74, 74.1, 74.2) réalisée en un matériau électriquement isolant et entourant une surface extérieure du corps conducteur, le corps conducteur pouvant être connecté au câblage (60) des deux côtés de la paroi (53, 54), et
dans lequel une surface extérieure de la gaine (74, 74.1, 74.2) comporte des éléments de prise murale (76) comportant des nervures fendues qui sont alignées en pente contrairement à la direction d'insertion du connecteur.

2. Bloc-batterie (200) selon la revendication 1, dans lequel le connecteur est un connecteur femelle (70, 70.1 à 70.4), le connecteur femelle (70, 70.1 à 70.4) comportant une douille (72) en tant que corps électriquement conducteur, et la gaine (74, 74.1, 74.2) entoure une surface extérieure de la douille (72), la douille (72) étant accessible des deux côtés de la paroi (53, 54).

3. Bloc-batterie selon l'une quelconque des revendications précédentes, dans lequel la surface extérieure de la gaine (74, 74.1, 74.2) comporte un élément d'alignement (78).

4. Bloc-batterie selon l'une quelconque des revendications précédentes, dans lequel la gaine (74, 74.1, 74.2) comporte un élément d'arrêt (80) d'un côté de la surface extérieure de la gaine (74, 74.1, 74.2).

5. Bloc-batterie selon l'une quelconque des revendications précédentes, dans lequel la gaine (74, 74.1, 74.2) comporte un élément d'étanchéité (82).

6. Bloc-batterie selon l'une quelconque des revendications précédentes, dans lequel deux ou plus de deux connecteurs sont fixés ensemble en parallèle et placés dans un trou traversant (55) commun.

7. Bloc-batterie selon l'une quelconque des revendications précédentes, dans lequel le corps conducteur est réalisé en aluminium, en cuivre ou en un alliage d'aluminium et/ou de cuivre.

8. Véhicule comportant un bloc-batterie (200) selon l'une quelconque des revendications précédentes.

9. Connecteur, comprenant :
une douille (72) électriquement conductrice, la douille (72) pouvant être connectée à un câblage (60) depuis des côtés opposés ; et
une gaine (74, 74.1, 74.2) réalisée en un matériau électriquement isolant et entourant une surface extérieure de la douille (72),
dans lequel une surface extérieure de la gaine (74, 74.1, 74.2) comporte des éléments de prise murale (76) comportant des nervures fendues qui sont alignées en pente contrairement à la direction d'insertion du connecteur.

10. Connecteur selon la revendication 9, le connecteur étant un connecteur femelle (70, 70.1 à 70.4).

11. Connecteur selon la revendications 9 ou 10, dans lequel une surface extérieure de la gaine (74, 74.1, 74.2) comporte un élément d'alignement (78).

12. Connecteur selon l'une quelconque des revendications 9 à 11, dans lequel la surface extérieure de la gaine (74, 74.1, 74.2) comporte un élément d'arrêt (80) d'un côté de la surface extérieure de la gaine (74, 74.1, 74.2).

13. Connecteur selon l'une quelconque des revendications 9 à 12, dans lequel la gaine (74, 74.1, 74.2) comporte un élément d'étanchéité (82).
